# EUROPEAN PATENT APPLICATION

(11) **EP 4 583 251 A1**
(43) Date of publication of application: **09.07.2025**
(21) Application number: 23859197.8
(22) Date of filing: 21.08.2023
(51) Int. Cl.: H01M 10/615, H01M 10/625, H01M 10/633, H01M 10/637, B60L 58/27, B60L 53/24, B60L 53/22

(54) **BATTERY HEATING DEVICE AND VEHICLE**

(30) Priority: 31.08.2022 CN 202211059231
(71) Applicant: BYD Company Limited, Shenzhen, Guangdong 518118 (CN)
(72) Inventor: LING, Heping, Shenzhen, Guangdong 518118 (CN); YAN, Lei, Shenzhen, Guangdong 518118 (CN); ZOU, Linli, Shenzhen, Guangdong 518118 (CN); WANG, Zhengpu, Shenzhen, Guangdong 518118 (CN); GAO, Wen, Shenzhen, Guangdong 518118 (CN)
(74) Representative: Mathys & Squire
(86) International application number: PCT/CN2023/114074
(87) International publication number: WO 2024/046163

(57) **Abstract**

A battery heating device comprises a controller, a power battery, a target winding and a target bridge arm. The power battery comprises a first battery module and a second battery module. A first end of the target winding is connected to a negative electrode of the first battery module and a positive electrode of the second battery module, and a second end of the target winding is connected to the midpoint of the target bridge arm. A first end of the target bridge arm is connected to a positive electrode of the first battery module, and a second end of the target bridge arm is connected to a negative electrode of the second battery module. The controller is connected to the target bridge arm, and is configured to: control, in a parking heating mode, the target bridge arm to cause the first battery module and the second battery module to charge and discharge alternately, thereby heating the power battery.

## Description

### CROSS-REFERENCE TO RELATED APPLICATIONS

The present disclosure claims priority of Chinese Patent Application No. 202211059231.0, filed on August 31, 2022 and entitled "BATTERY HEATING DEVICE AND VEHICLE", which is incorporated herein by reference in its entirety.

### FIELD

The present disclosure relates to the field of battery heating technologies, and specifically, to a battery heating device and a vehicle.

### BACKGROUND

With the development of new energy vehicle technologies, user experience requirements on new energy vehicles are increasingly high. A battery, as a key component in a new energy vehicle, has the most direct impact on cost reduction for businesses and user experience. A battery of a new energy vehicle is affected by temperature, and the electrical performance of the battery decreases at low temperatures, which seriously affects discharging performance of a power battery, resulting in problems such as shortening a driving range and limiting an output power during driving. Therefore, it is necessary to heat the power battery, so that the body temperature of the power battery rises, thereby ensuring that an impact on performance of an electric vehicle in a cold condition is reduced.

### SUMMARY

An objective of the present disclosure is to provide a battery heating device and a vehicle.

To achieve the foregoing objective, according to a first aspect of the present disclosure, a battery heating device is provided, including: a controller, a power battery, a target winding, and a target bridge arm. The power battery includes a first battery module and a second battery module connected in series.

A first end of the target winding is connected to a negative electrode of the first battery module and a positive electrode of the second battery module, and a second end of the target winding is connected to a midpoint of the target bridge arm.

A first end of the target bridge arm is connected to a positive electrode of the first battery module, and a second end of the target bridge arm is connected to a negative electrode of the second battery module.

The controller is connected to the target bridge arm, and the controller is configured to: control, in a parking heating mode, the target bridge arm to cause the first battery module and the second battery module to charge and discharge alternately, thereby heating the power battery.

According to an embodiment of the present disclosure, the battery heating device further includes:
a load, where a first end of the load is connected to the first end of the target bridge arm, and a second end of the load is connected to the second end of the target bridge arm.

The controller is configured to:
control, in a uniform heating power supply mode, the target bridge arm to cause the first battery module and the second battery module to jointly supply power to the load, and implement a balance between the first battery module and the second battery module.

According to an embodiment of the present disclosure, when a first voltage of the first battery module is greater than a second voltage of the second battery module, the controller is configured to:
control, in a first time period of the uniform heating power supply mode, an upper bridge arm of the target bridge arm to turn on and a lower bridge arm of the target bridge arm to turn off, the first battery module and the second battery module to jointly supply power to the load, and the target winding to store energy; and
control, in a second time period of the uniform heating power supply mode, a lower bridge arm of the target bridge arm to turn on and an upper bridge arm of the target bridge arm to turn off, the first battery module and the second battery module to jointly supply power to the load, and the target winding to release the stored energy to charge the second battery module.

According to an embodiment of the present disclosure, when a first voltage of the first battery module is less than a second voltage of the second battery module, the controller is configured to:
control, in a first time period of the uniform heating power supply mode, a lower bridge arm of the target bridge arm to turn on and an upper bridge arm of the target bridge arm to turn off, the first battery module and the second battery module to jointly supply power to the load, and the target winding to store energy; and
control, in a second time period of the uniform heating power supply mode, the upper bridge arm of the target bridge arm to turn on and the lower bridge arm of the target bridge arm to turn off, the first battery module and the second battery module to jointly supply power to the load, and the target winding to release the stored energy to charge the first battery module.

According to an embodiment of the present disclosure, the controller is configured to:
control, in a first half cycle of a parking heating mode, the target bridge arm to cause the first battery module to discharge to charge the second battery module; and
control, in a second half cycle of the parking heating mode, the target bridge arm to cause the second battery module to discharge to charge the first battery module,
the first half cycle and the second half cycle are alternately performed.

According to an embodiment of the present disclosure, the controller is configured to:
control, in a first time period of the first half cycle of the parking heating mode, the upper bridge arm of the target bridge arm to turn on and the lower bridge arm of the target bridge arm to turn off, the first battery module to discharge, and the target winding to store energy; and
control, in a second time period of the first half cycle of the parking heating mode, the lower bridge arm of the target bridge arm to turn on and the upper bridge arm of the target bridge arm to turn off, and the target winding to release the stored energy to charge the second battery module.

According to an embodiment of the present disclosure, the controller is configured to:
control, in a first time period of the second half cycle of the parking heating mode, the lower bridge arm of the target bridge arm to turn on and the upper bridge arm of the target bridge arm to turn off, the second battery module to discharge, and the target winding to store energy; and
control, in a second time period of the second half cycle of the parking heating mode, the upper bridge arm of the target bridge arm to turn on and the lower bridge arm of the target bridge arm to turn off, and the target winding to release the stored energy to charge the first battery module.

According to an embodiment of the present disclosure, the battery heating device further includes a bus capacitor, where a first end of the bus capacitor is connected to the first end of the target bridge arm, and a second end of the bus capacitor is connected to the second end of the target bridge arm. The load includes at least one driving load.

The controller is configured to:
control, in a first half cycle of a driving heating mode, the target bridge arm to cause the first battery module to discharge, and the first battery module or the bus capacitor to supply power to the driving load to drive the vehicle, and charge the second battery module; and
control, in a second half cycle of the driving heating mode, the target bridge arm to cause the second battery module to discharge, and the second battery module or the bus capacitor to supply power to the driving load to drive the vehicle, and charge the first battery module.

According to an embodiment of the present disclosure, the controller is configured to:
control, in a first time period of the first half cycle of the driving heating mode, the upper bridge arm of the target bridge arm to turn on and the lower bridge arm of the target bridge arm to turn off, the first battery module to discharge, the target winding to store energy, and the bus capacitor to supply power to the driving load;
control, in a second time period of the first half cycle of the driving heating mode, the lower bridge arm of the target bridge arm to turn on and the upper bridge arm of the target bridge arm to turn off, the first battery module to discharge to charge the bus capacitor and supply power to the driving load, and the target winding to release the stored energy to the second battery module to charge the second battery module.

According to an embodiment of the present disclosure, the controller is configured to:
control, in a first time period of a second half cycle of the driving heating mode, the lower bridge arm of the target bridge arm to turn on and the upper bridge arm of the target bridge arm to turn off, the second battery module to discharge, the target winding to store energy, and the bus capacitor to supply power to the driving load; and
control, in a second time period of the second half cycle of the driving heating mode, the upper bridge arm of the target bridge arm to turn on and the lower bridge arm of the target bridge arm to turn off, the second battery module to discharge to charge the bus capacitor and supply power to the driving load, and the target winding to release the stored energy to the first battery module to charge the first battery module.

According to an embodiment of the present disclosure, a bridge arm of a motor controller is reused as the target bridge arm, and a coil of a motor is reused as the target winding.

According to an embodiment of the present disclosure, the battery heating device further includes a first target switch, where a first end of the first target switch is connected to the negative electrode of the first battery module and the positive electrode of the second battery module, and a second end of the first target switch is connected to an N line led out of the motor.

The controller is configured to: control, when receiving a driving instruction, the first target switch to turn off to perform a driving mode; and
control, when receiving a parking heating request instruction, a driving heating request instruction, or a uniform heating power supply request instruction, the first target switch to turn on to enter a corresponding mode.

According to an embodiment of the present disclosure, the battery heating device further includes:
a second target switch, where a first end of the second target switch is connected to the negative electrode of the first battery module and the positive electrode of the second battery module, and a second end of the second target switch is connected to the N line led out of the motor; and
a third target switch, where a first end of the third target switch is connected to the N line led out of the motor, and a second end of the third target switch is connected to the motor of an electric drive system.

The controller is configured to: control, in a multi-drive synergy driving mode, the second target switch to turn off, and the third target switch to turn on or off, to implement multi-drive synergy driving; and
control, when receiving a parking heating request instruction, a driving heating request instruction, or a uniform heating power supply request instruction, the second target switch to turn on, and the third target switch to turn off to enter a corresponding mode.

According to a second aspect of the present disclosure, a vehicle is provided, where the vehicle includes the battery heating device described in the first aspect.

According to the foregoing technical solution, a battery heating device is provided, including a controller, a power battery, a target winding, and a target bridge arm. The power battery includes a first battery module and a second battery module connected in series. A first end of the target winding is connected to a negative electrode of the first battery module and a positive electrode of the second battery module, and a second end of the target winding is connected to a midpoint of the target bridge arm. A first end of the target bridge arm is connected to a positive electrode of the first battery module, and a second end of the target bridge arm is connected to a negative electrode of the second battery module. The controller is connected to the target bridge arm, and is configured to: control, in a parking heating mode, the target bridge arm to cause the first battery module and the second battery module to charge and discharge alternately, thereby heating the power battery. In this way, the first battery module and the second battery module can be jointly connected to a same target winding. The target bridge arm is controlled to cause the first battery module and the second battery module to alternately charge and discharge through the target winding. In this way, a heating requirement on the power battery can be satisfied, and charging can be interleaved, thereby ensuring stability of a total voltage of the power battery, and helping improve reliability of supplying power to a vehicle.

Additional aspects and advantages of the present disclosure will be given in the following descriptions, some of which will become apparent from the following descriptions or may be learned from practices of the disclosure.

### BRIEF DESCRIPTION OF THE DRAWINGS

The foregoing and/or additional aspects and advantages of the present disclosure become apparent and comprehensible in the descriptions made with reference to the following accompanying drawings, where:
FIG. 1 is a schematic diagram of a principle of battery internal heating according to an embodiment of the present disclosure;
FIG. 2 is a diagram of a circuit of a battery heating device according to an embodiment of the present disclosure;
FIG. 3 is a schematic diagram of a current direction of a heating process of a power battery according to an embodiment of the present disclosure;
FIG. 4 is a schematic diagram of a current direction of a discharging process of a winding according to the embodiment shown in FIG. 3;
FIG. 5 is a schematic diagram of a current direction of an electricity storing process of a winding according to an embodiment of the present disclosure;
FIG. 6 is a schematic diagram of a current direction of a discharging process of a winding according to the embodiment shown in FIG. 5;
FIG. 7 is a schematic diagram of a current direction of another electricity storing process of a winding according to an embodiment of the present disclosure;
FIG. 8 is a schematic diagram of a current direction of a discharging process of a winding according to the embodiment shown in FIG. 7;
FIG. 9 is a schematic diagram of a current direction of still another electricity storing process of a winding according to an embodiment of the present disclosure;
FIG. 10 is a schematic diagram of a current direction of a discharging process of a winding according to the embodiment shown in FIG. 9;
FIG. 11 is a schematic diagram of a current direction of still another electricity storing process of a winding according to an embodiment of the present disclosure;
FIG. 12 is a schematic diagram of a current direction of a discharging process of a winding according to the embodiment shown in FIG. 11;
FIG. 13 is a schematic diagram of a current direction of still another electricity storing process of a winding according to an embodiment of the present disclosure;
FIG. 14 is a schematic diagram of a current direction of a discharging process of a winding according to the embodiment shown in FIG. 13;
FIG. 15 is a diagram of a circuit of the battery heating device according to the embodiment shown in FIG. 2; and
FIG. 16 is a diagram of a circuit of another battery heating device according to the embodiment shown in FIG. 2.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the disclosure and cannot be construed as a limitation to the present disclosure.

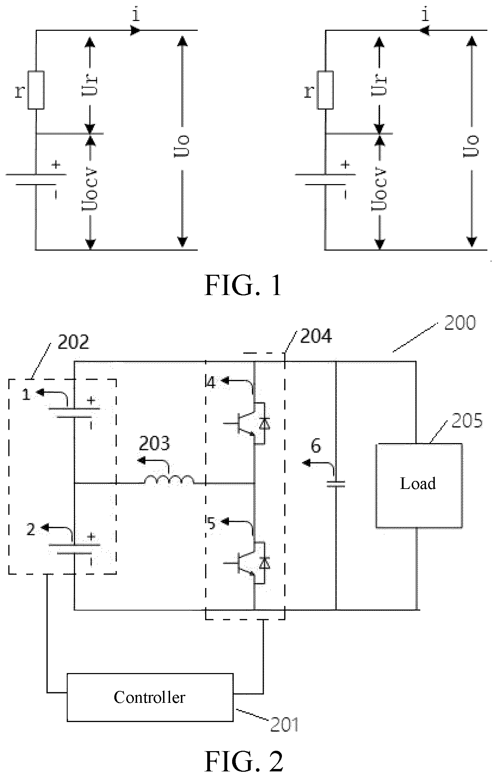

Before specific implementations of the present disclosure are described in detail, the following first describes application scenarios of the present disclosure. The present disclosure may be applied to a scenario of battery heating, for example, a process of heating a power battery in a vehicle or heating a battery in an electronic device in a low-temperature environment. The heating of the power battery is used as an example for description herein. Most vehicle heating manners in the related art are as follows: a positive temperature coefficient (PTC, thermistor) heats the power battery at a low temperature; a heating principle is that when it is detected that a temperature of the power battery is excessively low, a switching transistor inside a battery heater is turned on, so that a heating resistance is energized to operate, thereby generating a high temperature, and the generated high temperature flows into the power battery through a water duct or an air duct, thereby increasing the temperature of the power battery. Some vehicles also perform internal heating, to be specific, a high current flows through an internal resistance of a battery, and the internal resistance of the battery generates heat (if an equivalent internal resistance of the battery is r, and a current is i, within a time t, heat generated by the internal resistance is i^2 rt). However, because an external heating manner is used, a high-voltage system of the whole vehicle needs to additionally distribute power to the battery heater (such as a thermistor), and also needs to distribute power to the water duct or the air duct, a pipeline, a low-voltage system, and the like, thereby increasing total costs; and to increase a heating speed, a power of the battery heater is further increased, resulting in a high energy loss of the power battery during heating, a fast power loss of a power battery SOC during driving in the winter, and a shorter vehicle range; in addition, external heating also has a problem of uneven battery temperature field distribution (a part close to the outside and close to a heat source has a high temperature, and a part away from the heat source and inside the power battery has a low distributed temperature). However, if the battery performs internal heating, a current used for heating not only generates heat on the internal resistance of the battery, but also generates a voltage loss on the internal resistance of the battery. As shown in FIG. 1, FIG. 1 is a schematic diagram of a principle of battery internal heating according to an embodiment of the present disclosure. Uocv is an open circuit voltage of the battery, and r is the equivalent internal resistance of the battery. When the current flows from the battery to the outside, which is equivalent to discharging the battery to the outside, a battery terminal voltage Uo is Uocv-i *r=Uocv-Ur; and when the current flows from the outside to the battery, which is equivalent to charging the battery from the outside, the battery terminal voltage Uo is Uocv+i*r=Uocv+Ur in this case. It may be seen that the battery terminal voltage continuously hops between [Uocv-Ur, Uocv+Ur]. Based on a current test of a real vehicle, an amplitude may reach [-10%Uocv, +10%Uocv]. and as a self-heating current increases, the voltage hopping gradually increases. In other words, a current battery heating solution usually has a problem of low heating efficiency and poor voltage stability, which is not conducive to improving reliability of supplying power to a vehicle.

To solve the foregoing technical solution, the present disclosure provides a battery heating device, including a controller, a power battery, a target winding and a target bridge arm. The power battery includes a first battery module and a second battery module connected in series. A first end of the target winding is connected to a negative electrode of the first battery module and a positive electrode of the second battery module, and a second end of the target winding is connected to a midpoint of the target bridge arm. A first end of the target bridge arm is connected to a positive electrode of the first battery module, and a second end of the target bridge arm is connected to a negative electrode of the second battery module. The controller is connected to the target bridge arm, and is configured to: control, in a parking heating mode, the target bridge arm to cause the first battery module and the second battery module to charge and discharge alternately, thereby heating the power battery. In this way, the first battery module and the second battery module can be jointly connected to a same target winding. The target bridge arm is controlled to cause the first battery module and the second battery module to alternately charge and discharge through the target winding. In this way, a heating requirement on the power battery can be satisfied, and charging can be interleaved, thereby ensuring stability of a total voltage of the power battery, and helping improve reliability of supplying power to a vehicle.

The following describes technical solutions of the present disclosure in detail with reference to specific accompanying drawings.

FIG. 2 is a diagram of a circuit of a battery heating device according to an embodiment of the present disclosure. As shown in FIG. 2, the battery heating device includes a controller 201, a power battery 202, a target winding 203, and a target bridge arm 204. The power battery 202 includes a first battery module 1 and a second battery module 2 connected in series.

A first end of the target winding 203 is connected to a negative electrode of the first battery module 1 and a positive electrode of the second battery module 2, and a second end of the target winding 203 is connected to a midpoint of the target bridge arm.

A first end of the target bridge arm 204 is connected to a positive electrode of the first battery module 1, and a second end of the target bridge arm 204 is connected to a negative electrode of the second battery module 2.

The controller 201 is connected to the target bridge arm 204, and the controller is configured to: control, in a parking heating mode, the target bridge arm 204 to cause the first battery module 1 and the second battery module 2 to charge and discharge alternately, thereby heating the power battery.

The heating device further includes a load, where a first end of the load is connected to the first end of the target bridge arm, and a second end of the load is connected to the second end of the target bridge arm.

The controller 201 is configured to:
control, in a uniform heating power supply mode, the target bridge arm 204 to cause the first battery module 1 and the second battery module 2 to jointly supply power to the load, and implement a balance between the first battery module and the second battery module.

It should be noted that the controller is connected to a control end of the target bridge arm 204, and the target winding 203 may be a single-phase winding, or may be a multiphase winding, for example, a three-phase winding, a six-phase winding. Each phase winding may be an inductor, or may be a reused motor winding in a device, or may be another element with an energy storing characteristic. Both the first battery module 1 and the second battery module 2 may be assemblies formed by multiple battery cores connected in series or in parallel, and quantities of the battery cores connected in series and connected in parallel may or may not be equal. The bridge arms included in the target bridge arm 204 are in a one-to-one correspondence with the windings in the target winding. The target winding 203 includes multiple phase windings, the target bridge arm 204 includes multiple bridge arms, the midpoint of the target bridge arm 204 is formed by midpoint terminals of the bridge arms, the first end of the target winding 204 includes first ends of the phase windings, a second end of each phase winding is respectively connected to a midpoint terminal of one of the bridge arms, each bridge arm includes an upper bridge arm and a lower bridge arm, the upper bridge arm may include an upper bridge switching transistor, and the lower bridge arm may include a lower bridge switching transistor. The controller 201 may be configured to: control the upper bridge switching transistor of at least one of the multiple bridge arms to turn on to implement turn-on of the upper bridge arm, and the upper bridge switching transistor to be cut off to implement turn-off of the upper bridge arm.

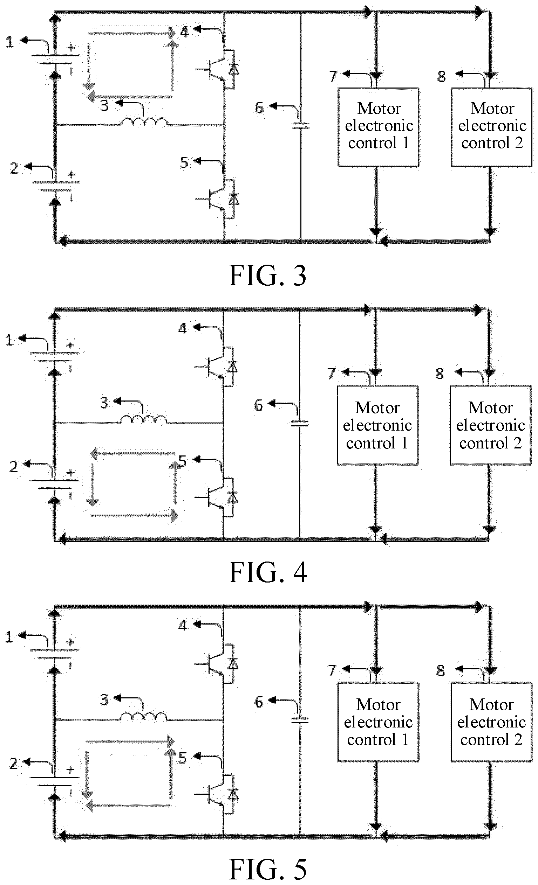

In addition, the upper bridge switching transistor and the lower bridge switching transistor may be insulated gate bipolar transistors (IGBTs), metal-oxide-semiconductor field-effect transistors (MOSFETs), or may be other silicon controlled rectifiers, to provide a path for a heating current. In some embodiments, the battery heating device further includes a load (for example, a motor electronic control 1 and a motor electronic control 2 shown in FIG. 3), and the load is connected to the positive electrode and the negative electrode of the power battery. The controller 201 is configured to control, when the vehicle is in a non-heating mode, the target bridge arm to be closed, and control the first battery module and the second battery module to jointly supply power to the load.

In the foregoing technical solution, the first battery module 1 and the second battery module 2 can be jointly connected to a same target winding. The target bridge arm 204 is controlled to cause the first battery module and the second battery module to alternately charge and discharge through the target winding. In this way, a heating requirement on the power battery can be satisfied, and charging can be interleaved, thereby ensuring stability of a total voltage of the power battery, and helping improve reliability of supplying power to the vehicle.

In some embodiments, the controller 201 is configured to: in a case of determining that the heating mode is a voltage uniform heating mode, control the first battery module 1 and the second battery module 2 to jointly discharge, and obtain a first voltage of the first battery module 1 and a second voltage of the second battery module 2, and if the first voltage is less than the second voltage, control the upper bridge switching transistor and the lower bridge switching transistor of at least one bridge arm of the multiple bridge arms to alternately turn on, where the lower bridge switching transistor is first connected to the upper bridge switching transistor, so that the second battery module charges the first battery module through the target winding.

It should be noted that, in a case of determining that a voltage difference between the first battery module 1 and the second battery module 2 is greater than or equal to a preset voltage threshold, the controller 201 automatically enters the voltage uniform heating mode, or may prompt a user to trigger an instruction of entering the voltage uniform heating mode to enter the voltage uniform heating mode, for example, may determine the current heating mode of the vehicle as the voltage uniform heating mode in response to receiving a target instruction triggered by the user through a designated button.

In a case that the first voltage is less than the second voltage, the controller 201 first controls the lower bridge switching transistor of at least one bridge arm of the multiple bridge arms to turn on, and the upper bridge switching transistor to turn off, and after preset duration, controls the lower bridge switching transistor to turn off, and controls the upper bridge switching transistor to turn on. The procedures are alternately performed, so that the second battery module stores electricity in the target winding when the lower bridge switching transistor of the at least one bridge arm is turned on and the upper bridge switching transistor is turned off, and the target winding discharges to charge the first battery module when the lower bridge switching transistor is turned off and the upper bridge switching transistor is turned on.

In some embodiments, when the first voltage of the first battery module is greater than the second voltage of the second battery module, the controller 201 is configured to: control, in a first time period of the uniform heating power supply mode, the upper bridge arm of the target bridge arm to turn on and the lower bridge arm of the target bridge arm to turn off, the first battery module and the second battery module to jointly supply power to the load, and the target winding to store energy; and control, in a second time period of the uniform heating power supply mode, the lower bridge arm of the target bridge arm to turn on and the upper bridge arm of the target bridge arm to turn off, the first battery module and the second battery module to jointly supply power to the load, and the target winding to release the stored energy to charge the second battery module.

In some embodiments, when the first voltage of the first battery module is less than the second voltage of the second battery module, the controller is configured to: control, in the first time period of the uniform heating power supply mode, the lower bridge arm of the target bridge arm to turn on and the upper bridge arm of the target bridge arm to turn off, the first battery module and the second battery module to jointly supply power to the load, and the target winding to store energy; and control, in the second time period of the uniform heating power supply mode, the upper bridge arm of the target bridge arm to turn on and the lower bridge arm of the target bridge arm to turn off, the first battery module and the second battery module to jointly supply power to the load, and the target winding to release the stored energy to charge the first battery module.

For example, an example in which the target winding 203 is a single-phase winding and the target bridge arm is a single bridge arm is used. The motor electronic control 1 and the motor electronic control 2 are further connected to the two ends of the power battery, where the motor electronic control refers to a motor controller and a motor.

FIG. 3 is a schematic diagram of a current direction of a power battery heating process according to an embodiment of the present disclosure. As shown in FIG. 3, in a case that the first voltage is greater than the second voltage, an upper bridge switching transistor 4 of the bridge arm is controlled to turn on, a lower bridge switching transistor 5 is controlled to be cut off, to store electricity in a winding 3; and in an electricity storing process, a current direction on the winding 3 is a direction indicated by internal arrows in FIG. 3. After preset duration, the upper bridge switching transistor 4 of the bridge arm is controlled to be cut off, and the lower bridge switching transistor 5 is controlled to turn on, to enter a stage in which the winding 3 discharges to charge the second battery module 2. As shown in FIG. 4, FIG. 4 is a schematic diagram of a current direction of a discharging process of a winding according to the embodiment shown in FIG. 3, where in a charging stage of the second battery module 2 (a discharging process of the winding 3), the current direction on the winding 3 is a direction indicated by internal arrows in FIG. 4.

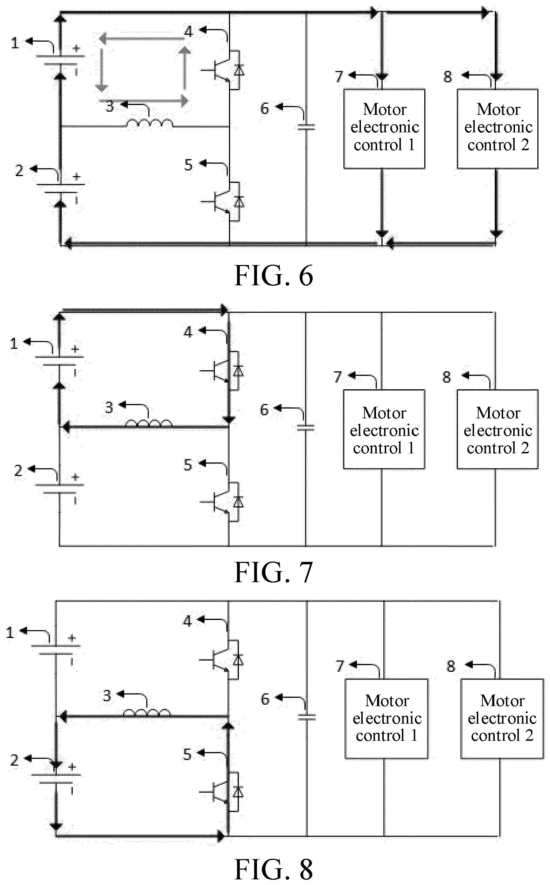

The first voltage of the first battery module 1 is less than the second voltage of the second battery module 2, the lower bridge switching transistor 5 of the bridge arm is controlled to turn on, the upper bridge switching transistor 4 is controlled to be cut off, to store electricity in the winding 3. The current direction on the winding 3 in an electricity storing process is a direction indicated by internal arrows in FIG. 5 (FIG. 5 is a schematic diagram of a current direction of an electricity storing process of a winding according to an embodiment of the present disclosure). After the preset duration, the lower bridge switching transistor 5 of the bridge arm is controlled to be cut off, and the upper bridge switching transistor 4 is controlled to turn on, to enter a stage in which the winding 3 discharges to charge the first battery module 1. As shown in FIG. 6, FIG. 6 is a schematic diagram of a current direction of a discharging process of a winding according to the embodiment shown in FIG. 5, where in a charging stage of the first battery module 1, the current direction on the winding 3 is a direction indicated by internal arrows in FIG. 6.

In the foregoing technical solution, through an alternating cycle of FIG. 3 and FIG. 4, while the first battery module 1 and the second battery module 2 are connected in series to supply power to the load (the motor electronic control 1 and the motor electronic control 2), a process of the first battery module 1 charging the second battery module 2 is implemented. Through an alternating cycle of FIG. 5 and FIG. 6, while the first battery module 1 and the second battery module 2 are connected in series to supply power to the load, a process of the second battery module 2 charging the second battery module 1 is implemented.

In some embodiments, the controller 201 is configured to: control, in a first half cycle of the parking heating mode, the target bridge arm to cause the first battery module to discharge to charge the second battery module; and control, in a second half cycle of the parking heating mode, the target bridge arm to cause the second battery module to discharge to charge the first battery module, where the first half cycle and the second half cycle are alternately performed.

In some embodiments, the controller 201 is configured to:
control, in a first time period of the first half cycle of the parking heating mode, the upper bridge arm of the target bridge arm to turn on and the lower bridge arm of the target bridge arm to turn off, the first battery module to discharge, and the target winding to store energy; and
control, in a second time period of the first half cycle of the parking heating mode, the lower bridge arm of the target bridge arm to turn on and the upper bridge arm of the target bridge arm to turn off, and the target winding to release the stored energy to charge the second battery module.

In some embodiments, the controller is configured to:
control, in a first time period of the second half cycle of the parking heating mode, the lower bridge arm of the target bridge arm to turn on and the upper bridge arm of the target bridge arm to turn off, the second battery module to discharge, and the target winding to store energy; and
control, in a second time period of the second half cycle of the parking heating mode, the upper bridge arm of the target bridge arm to turn on and the lower bridge arm of the target bridge arm to turn off, and the target winding to release the stored energy to charge the first battery module.

The first half cycle and the second half cycle form a cycle in which the first battery module and the second battery module alternately discharge, and the first time period and the second time period form a cycle in which the upper bridge switching transistor and the lower bridge switching transistor are alternately turned on.

It should be noted that, in the parking heating mode, the load connected to the power battery does not work, that is, the power battery simply performs self-heating. A frequency at which the first battery module 1 and the second battery module 2 alternately discharge is less than a frequency at which the upper bridge switching transistor and the lower bridge switching transistor are alternately turned on. The greater the frequency at which the upper bridge switching transistor and the lower bridge switching transistor are alternately turned on, the less voltage fluctuation at both ends of the power battery, and the higher the reliability of supplying power to the vehicle.

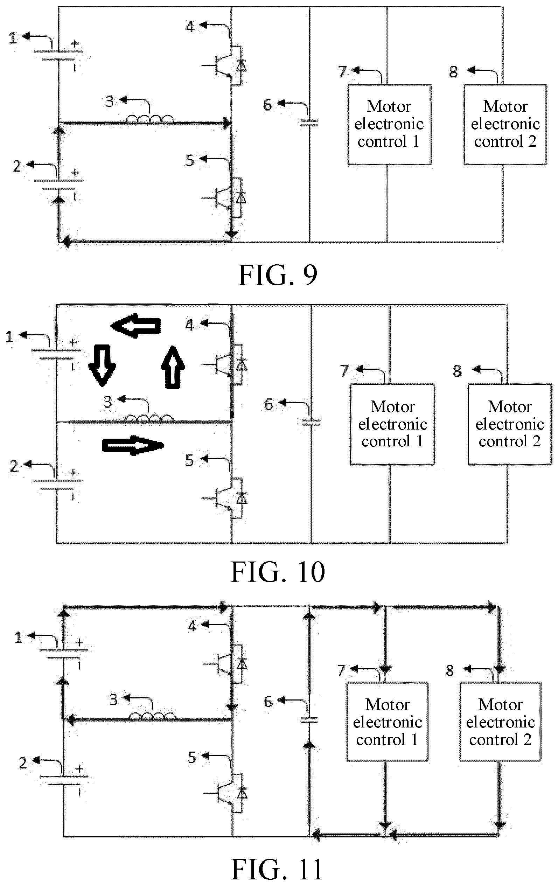

In the parking heating mode, that the upper bridge switching transistor 4 is first connected to the lower bridge switching transistor 5 means that the upper bridge switching transistor 4 is first controlled to turn on, and the lower bridge switching transistor 5 is cut off, so that the first battery module 1 stores electricity in the target winding (as shown in FIG. 7, FIG. 7 is a schematic diagram of a current direction of another electricity storing process of a winding according to an embodiment of the present disclosure. A direction of arrows in FIG. 7 is a current direction when the winding 3 is storing electricity), and then, after specified duration, the upper bridge switching transistor to be cut off and the lower bridge switching transistor is controlled to turn on, so that the target winding charges the second battery module 2 (as shown in FIG. 8, FIG. 8 is a schematic diagram of a current direction of a discharging process of a winding according to the embodiment shown in FIG. 7, and a direction of arrows in FIG. 8 is a current direction when the winding 3 discharges). That the lower bridge switching transistor 5 is first connected to the upper bridge switching transistor 4 means that the lower bridge switching transistor is first controlled to turn on, and the upper bridge switching transistor 4 is cut off, so that the second battery module 2 stores electricity in the target winding (as shown in FIG. 9, FIG. 9 is a schematic diagram of a current direction of still another electricity storing process of a winding according to an embodiment of the present disclosure. A direction of arrows in FIG. 9 is a current direction when the winding 3 stores electricity), and then, after specified duration, the lower bridge switching transistor 5 is controlled to be cut off and the upper bridge switching transistor 4 is controlled to turn on, so that the target winding charges the first battery module 1 (as shown in FIG. 10, FIG. 10 is a schematic diagram of a current direction of a discharging process of a winding according to the embodiment shown in FIG. 9, and a direction of arrows in FIG. 10 is a current direction when the winding 3 discharges).

In some embodiments, the battery heating assembly further includes a bus capacitor, where a first end of the bus capacitor is connected to the first end of the target bridge arm, and a second end of the bus capacitor is connected to the second end of the target bridge arm; and the load includes at least one driving load.

The controller 201 is configured to:
control, in a first half cycle of a driving heating mode, the target bridge arm to cause the first battery module to discharge, and the first battery module or the bus capacitor to supply power to the driving load to drive the vehicle, and charge the second battery module; and
control, in a second half cycle of the driving heating mode, the target bridge arm to cause the second battery module to discharge, and the second battery module or the bus capacitor to supply power to the driving load to drive the vehicle, and charge the first battery module.

In some embodiments, the controller 201 is configured to:
control, in a first time period of a second half cycle of the driving heating mode, the lower bridge arm of the target bridge arm to turn on and the upper bridge arm of the target bridge arm to turn off, the second battery module to discharge, the target winding to store energy, and the bus capacitor to supply power to the driving load; and
control, in a second time period of the second half cycle of the driving heating mode, the upper bridge arm of the target bridge arm to turn on and the lower bridge arm of the target bridge arm to turn off, the second battery module to discharge to charge the bus capacitor and supply power to the driving load, and the target winding to release the stored energy to the first battery module to charge the first battery module.

In the driving heating mode, the first battery module 1 and the second battery module 2 alternately discharge to supply power to the load (for example, the motor electronic control 1 and the motor electronic control 2), and at the same time complete self-heating of the first battery module 1 and the second battery module 2.

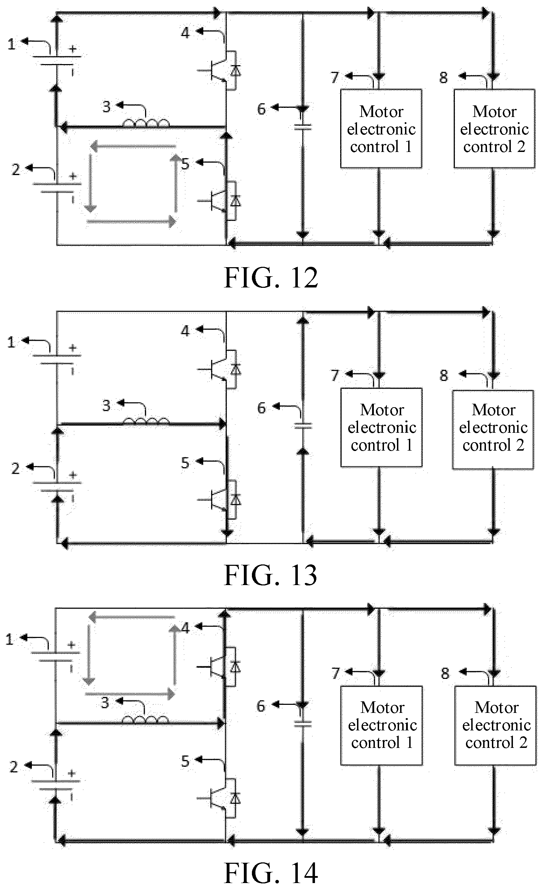

For example, FIG. 11 is a schematic diagram of a current direction of still another electricity storing process of a winding according to an embodiment of the present disclosure. In the driving heating mode, when the first battery module 1 discharges, the upper bridge switching transistor 4 is controlled to turn on, and the lower bridge switching transistor 5 is controlled to be cut off, so that the first battery module 1 stores electricity in the target winding (as shown in FIG. 11, a direction of arrows in FIG. 11 is a current direction when the winding 3 is storing electricity), and at the same time, power pre-charged in a capacitor 6 maintains electricity utilization of the load (the motor electronic control 1 and the motor electronic control 2); and then, after specified duration, the upper bridge switching transistor is controlled to be cut off and the lower bridge switching transistor is controlled to turn on, so that the target winding charges the second battery module 2 (as shown in FIG. 12, FIG. 12 is a schematic diagram of a current direction of a discharging process of a winding according to the embodiment shown in FIG. 11, and a direction of arrows in FIG. 12 is a current direction when the winding 3 discharges), and at the same time, the first battery module 1 and the winding 3 are connected in series to charge the capacitor 6 and supply power to the load (the motor electronic control 1 and the motor electronic control 2). In this way, through an alternating cycle shown in FIG. 11 and FIG. 12, a voltage boost supply by the first battery module 1 to the load is completed, and a process of the first battery module 1 charging the second battery module 2 is completed. In the two processes in FIG. 11 and FIG. 12, the first battery module 1 continuously discharges, and the second battery module 2 is continuously being charged.

After target duration (the target duration is the first half cycle period, and a moment after the target duration is within the second half cycle), the second battery module may be controlled to discharge, the first battery module may be controlled to stop discharging, the lower bridge switching transistor 5 is first turned on, and the upper bridge switching transistor 4 is cut off, so that the second battery module 2 stores electricity in the target winding (as shown in FIG. 13, FIG. 13 is a schematic diagram of a current direction of still another electricity storing process of a winding according to an embodiment of the present disclosure, where a direction of arrows in FIG. 13 is a current direction when the winding 3 stores electricity), and at the same time, the power pre-charged in the capacitor 6 maintains electricity utilization of the load (the motor electronic control 1 and the motor electronic control 2). Then, after specified duration (the specified duration is the first time period, and a moment after the specified duration is within the second time period), the lower bridge switching transistor 5 is controlled to be cut off and the upper bridge switching transistor 4 is controlled to turn on, so that the target winding charges the first battery module 1 (as shown in FIG. 14, FIG. 14 is a schematic diagram of a current direction of a discharging process of a winding according to the embodiment shown in FIG. 13, and a direction of arrows in FIG. 14 is a current direction when the winding 3 discharges). In this way, through an alternating cycle shown in FIG. 13 and FIG. 14, a voltage boost supply by the second battery module 2 to the load is completed, and the second battery module 2 charging the first battery module 1 is completed. In the two processes in FIG. 13 and FIG. 14, the second battery module 2 continuously discharges, and the first battery module 1 is continuously being charged.

In some embodiments, a bridge arm of a motor controller may be reused as the target bridge arm, and a coil of a motor may be reused as the target winding.

In some embodiments, the battery heating device further includes a first target switch, where a first end of the first target switch is connected to the negative electrode of the first battery module and the positive electrode of the second battery module, and a second end of the first target switch is connected to an N line led out of the motor.

The controller 201 is configured to: control, when receiving a driving instruction, the first target switch to turn off to perform a driving mode; and
control, when receiving a parking heating request instruction, a driving heating request instruction, or a uniform heating power supply request instruction, the first target switch to turn on to enter a corresponding mode.

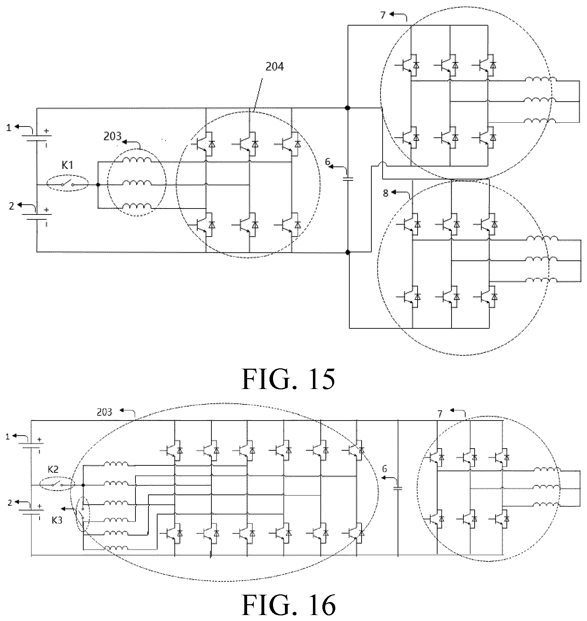

For example, FIG. 15 a diagram of a circuit of the battery heating device according to the embodiment shown in FIG. 2. In FIG. 15, the target winding includes three phase windings, and a first end of the target winding is connected to the negative electrode of the first battery module and the positive electrode of the second battery module through the first target switch;

The controller 201 is configured to: control the first target switch K1 to turn off in a case of determining that the vehicle is in the driving heating mode, the parking heating mode, or the voltage uniform heating mode, and control the first target switch K1 to turn off in a case of determining that the vehicle is in a four-wheel drive mode, and supply power to the three phase windings through the target bridge arm to provide a driving force for the vehicle.

It should be noted that, when the vehicle is in the driving heating mode, the first target switch K1 is controlled to turn on, and the target bridge arm is controlled in the control manner shown in FIG. 11 and FIG. 12, so that while the voltage boost supply by the first battery module 1 to the load is completed, a process of the first battery module 1 charging the second battery module 2 is completed; the target bridge arm is controlled in the control manner shown in FIG. 13 and FIG. 14, so that while the voltage boost supply by the second battery module 2 to the load is completed, a process of the second battery module 2 charging the first battery module 1 is completed, so that in an interleaving boost driving manner, the motor in the vehicle is driven while self-heating is completed, to control traveling of the vehicle. When the vehicle is in the parking heating mode, the first target switch K1 is controlled to turn on, and the target bridge arm is controlled in the control manner shown in FIG. 7 to FIG. 10, so that the first battery module and the second battery module charge each other through the target winding, to implement heating of the power battery. When the vehicle is in the voltage uniform heating mode, the first target switch K1 is controlled to turn on, and the target bridge arm is controlled in the control manner shown in FIG. 3 to FIG. 6, so that the first battery module and the second battery module jointly supply power to the load, and the first battery module and the second battery module charge each other through the target winding, to implement the heating of the power battery.

In some embodiments, the battery heating device further includes: a second target switch, where a first end of the second target switch is connected to the negative electrode of the first battery module and the positive electrode of the second battery module, and a second end of the second target switch is connected to the N line led out of the motor; and
a third target switch, where a first end of the third target switch is connected to the N line led out of the motor, and a second end of the third target switch is connected to the motor of an electric drive system.

The controller 201 is configured to: control, in a multi-drive synergy driving mode, the second target switch to turn off, and the third target switch to turn on or off, to implement multi-drive synergy driving; and
control, when receiving a parking heating request instruction, a driving heating request instruction, or a uniform heating power supply request instruction, the second target switch to turn on, and the third target switch to turn off to enter a corresponding mode.

It should be noted that, in the multi-drive synergy driving mode, when the second target switch is controlled to turn off, and the third target switch is controlled to turn on, a six-phase motor is formed, so that multi-drive synergy driving of the six-phase motor and a three-phase motor is implemented. In the multi-drive synergy driving mode, when the second target switch is controlled to turn off, and the third target switch is controlled to turn off, multi-drive synergy driving of three three-phase motors is implemented.

For example, FIG. 16 is a diagram of a circuit of another battery heating device according to the embodiment shown in FIG. 2. In FIG. 16, the target winding includes a first set of winding coils and a second set of winding coils, where the first set of winding coils includes three coils, first ends of the coils in the first set of windings are connected to a first end of a second target switch K2 and a first end of a third target switch K3, and second ends of the coils in the first set of windings and second ends of the coils in the second set of windings are respectively connected to a midpoint terminal of a bridge arm.

In a case that it is determined that the vehicle is in the driving heating mode, the parking heating mode, or the voltage uniform heating mode, after the second target switch K2 is controlled to turn on and the third target switch K3 is controlled to turn off, for control of the target bridge arm, reference may be made to the related descriptions in FIG. 3 to FIG. 14, and details are not described herein again in the present disclosure. In a case that it is determined that the vehicle is in a full-power driving mode, for control of the target bridge arm, reference may be made to a manner of controlling the motor through a full bridge circuit in the related art, where the control manner is mature in the related art, and is not limited in the present disclosure.

In the foregoing technical solution, through reusing of the motor winding in the vehicle, flexible control on uses of the motor winding is implemented, so that flexibility and reliability of a driving process of the vehicle can be improved while battery heating costs of the vehicle are reduced.

Another embodiment of the present disclosure provides a vehicle, where the vehicle includes the battery heating device according to any one of FIG. 2 to FIG. 16.

The embodiments of the present disclosure are described in detail above with reference to the accompanying drawings, but the present disclosure is not limited to the specific details in the above embodiments. Various simple variations may be made to the technical solutions of the present disclosure within the scope of the technical idea of the present disclosure, and such simple variations shall all fall within the protection scope of the present disclosure.

It should be further noted that the specific technical features described in the above specific embodiments may be combined in any suitable manner without contradiction. To avoid unnecessary repetition, various possible combinations are not further described in the present disclosure.

In addition, the various embodiments of the present disclosure may be combined without departing from the idea of the present disclosure, and such combinations shall also fall within the scope of the present disclosure.

## Claims

1. A battery heating device (200), comprising a controller (201), a power battery (202), a target winding (203), and a target bridge arm (204); the power battery comprising a first battery module (1) and a second battery module (2) connected in series;
a first end of the target winding being connected to a negative electrode of the first battery module and a positive electrode of the second battery module, and a second end of the target winding being connected to a midpoint of the target bridge arm;
a first end of the target bridge arm being connected to a positive electrode of the first battery module, and a second end of the target bridge arm being connected to a negative electrode of the second battery module; and
the controller (201) being connected to the target bridge arm, and the controller being configured to: control, in a parking heating mode, the target bridge arm to cause the first battery module and the second battery module to charge and discharge alternately, thereby heating the power battery.

2. The battery heating device according to claim 1, further comprising:
a load (205), a first end of the load being connected to the first end of the target bridge arm, and a second end of the load being connected to the second end of the target bridge arm; and
the controller (201) being configured to:
control, in a uniform heating power supply mode, the target bridge arm to cause the first battery module and the second battery module to jointly supply power to the load, and implement a balance between the first battery module and the second battery module.

3. The battery heating device according to claim 2, wherein when a first voltage of the first battery module is greater than a second voltage of the second battery module, the controller (201) is configured to:
control, in a first time period of the uniform heating power supply mode, an upper bridge arm of the target bridge arm to turn on and a lower bridge arm of the target bridge arm to turn off, the first battery module and the second battery module to jointly supply power to the load, and the target winding to store energy; and
control, in a second time period of the uniform heating power supply mode, the lower bridge arm of the target bridge arm to turn on and the upper bridge arm of the target bridge arm to turn off, the first battery module and the second battery module to jointly supply power to the load, and the target winding to release the stored energy to charge the second battery module.

4. The battery heating device according to claim 2, wherein when a first voltage of the first battery module is less than a second voltage of the second battery module, the controller (201) is configured to:
control, in a first time period of the uniform heating power supply mode, a lower bridge arm of the target bridge arm to turn on and an upper bridge arm of the target bridge arm to turn off, the first battery module and the second battery module to jointly supply power to the load, and the target winding to store energy; and
control, in a second time period of the uniform heating power supply mode, the upper bridge arm of the target bridge arm to turn on and the lower bridge arm of the target bridge arm to turn off, the first battery module and the second battery module to jointly supply power to the load, and the target winding to release the stored energy to charge the first battery module.

5. The battery heating device according to any one of claims 1 to 4, wherein the controller (201) is configured to:
control, in a first half cycle of the parking heating mode, the target bridge arm to cause the first battery module to discharge to charge the second battery module; and
control, in a second half cycle of the parking heating mode, the target bridge arm to cause the second battery module to discharge to charge the first battery module, wherein
the first half cycle and the second half cycle are alternately performed.

6. The battery heating device according to claim 5, wherein the controller (201) is configured to:
control, in a first time period of the first half cycle of the parking heating mode, the upper bridge arm of the target bridge arm to turn on and the lower bridge arm of the target bridge arm to turn off, the first battery module to discharge, and the target winding to store energy; and
control, in a second time period of the first half cycle of the parking heating mode, the lower bridge arm of the target bridge arm to turn on and the upper bridge arm of the target bridge arm to turn off, and the target winding to release the stored energy to charge the second battery module.

7. The battery heating device according to claim 5, wherein
the controller (201) is configured to:
control, in a first time period of the second half cycle of the parking heating mode, the lower bridge arm of the target bridge arm to turn on and the upper bridge arm of the target bridge arm to turn off, the second battery module to discharge, and the target winding to store energy; and
control, in a second time period of the second half cycle of the parking heating mode, the upper bridge arm of the target bridge arm to turn on and the lower bridge arm of the target bridge arm to turn off, and the target winding to release the stored energy to charge the first battery module.

8. The battery heating device according to any one of claims 1 to 7, wherein the battery heating device further comprises: a bus capacitor (6), a first end of the bus capacitor is connected to the first end of the target bridge arm, and a second end of the bus capacitor is connected to the second end of the target bridge arm; and the load comprises at least one driving load; and
the controller (201) is configured to:
control, in a first half cycle of a driving heating mode, the target bridge arm to cause the first battery module to discharge, and the first battery module or the bus capacitor to supply power to the driving load to drive the vehicle, and charge the second battery module; and
control, in a second half cycle of the driving heating mode, the target bridge arm to cause the second battery module to discharge, and the second battery module or the bus capacitor to supply power to the driving load to drive the vehicle, and charge the first battery module.

9. The battery heating device according to claim 8, wherein the controller (201) is configured to:
control, in a first time period of the first half cycle of the driving heating mode, the upper bridge arm of the target bridge arm to turn on and the lower bridge arm of the target bridge arm to turn off, the first battery module to discharge, the target winding to store energy, and the bus capacitor to supply power to the driving load; and
control, in a second time period of the first half cycle of the driving heating mode, the lower bridge arm of the target bridge arm to turn on and the upper bridge arm of the target bridge arm to turn off, the first battery module to discharge to charge the bus capacitor and supply power to the driving load, and the target winding to release the stored energy to the second battery module to charge the second battery module.

10. The battery heating device according to claim 8, wherein the controller (201) is configured to:
control, in a first time period of a second half cycle of the driving heating mode, the lower bridge arm of the target bridge arm to turn on and the upper bridge arm of the target bridge arm to turn off, the second battery module to discharge, the target winding to store energy, and the bus capacitor to supply power to the driving load; and
control, in a second time period of the second half cycle of the driving heating mode, the upper bridge arm of the target bridge arm to turn on and the lower bridge arm of the target bridge arm to turn off, the second battery module to discharge to charge the bus capacitor and supply power to the driving load, and the target winding to release the stored energy to the first battery module to charge the first battery module.

11. The battery heating device according to any one of claims 1 to 10, wherein a bridge arm of a motor controller is reused as the target bridge arm, and a coil of a motor is reused as the target winding.

12. The battery heating device according to claim 11, wherein further comprises a first target switch (K1), a first end of the first target switch is connected to the negative electrode of the first battery module and the positive electrode of the second battery module, and a second end of the first target switch is connected to an N line led out of the motor; and
the controller (201) is configured to: control, when receiving a driving instruction, the first target switch to turn off to perform a driving mode; and
control, when receiving a parking heating request instruction, a driving heating request instruction, or a uniform heating power supply request instruction, the first target switch to turn on to enter a corresponding mode.

13. The battery heating device according to claim 11, further comprising:
a second target switch (K2), a first end of the second target switch being connected to the negative electrode of the first battery module and the positive electrode of the second battery module, and a second end of the second target switch being connected to an N line led out of the motor; and
a third target switch (K3), a first end of the third target switch being connected to the N line led out of the motor, and a second end of the third target switch being connected to the motor of an electric drive system,
the controller (201) being configured to: control, in a multi-drive synergy driving mode, the second target switch to turn off, and the third target switch to turn on or off, to implement multi-drive synergy driving; and
control, when receiving a parking heating request instruction, a driving heating request instruction, or a uniform heating power supply request instruction, the second target switch to turn on, and the third target switch to turn off to enter a corresponding mode.

14. A vehicle, comprising the battery heating device according to any one of claims 1 to 13.
